(19) Europäisches Patentamt
European Patent Office
Office européen des brevets

(11) **EP 4 012 363 A1**

(12) **EUROPEAN PATENT APPLICATION**

(43) Date of publication:
**15.06.2022 Bulletin 2022/24**

(21) Application number: **21204795.5**

(22) Date of filing: **26.10.2021**

(51) International Patent Classification (IPC):
**G01J 5/02** (2022.01)    **G01J 5/06** (2022.01)
**G01J 5/90** (2022.01)    **H04N 5/33** (2006.01)
**G01J 5/00** (2022.01)

(52) Cooperative Patent Classification (CPC):
**G01J 5/90; G01J 5/026; G01J 5/0275; G01J 5/064;**
G01J 5/804; G01J 2005/0077; H04N 5/33

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **14.12.2020 US 202063125370 P**

(71) Applicant: **Flir Commercial Systems, Inc.
Goleta, California 93117 (US)**

(72) Inventors:
• **KOSTRZEWA, Joseph
Goleta, 93117 (US)**
• **JUDD, Kelsey M.
Goleta, 93117 (US)**

(74) Representative: **Murgitroyd & Company
Murgitroyd House
165-169 Scotland Street
Glasgow G5 8PL (GB)**

(54) **INFRARED IMAGING-RELATED UNCERTAINTY GAUGING SYSTEMS AND METHODS**

(57) Techniques for facilitating uncertainty gauging for imaging systems and methods are provided. In one example, a method includes determining temperature data associated with infrared image data of a scene. The method further includes receiving at least one parameter associated with the infrared image data. The method further includes determining an uncertainty factor associated with the temperature data based on the at least one parameter. Related devices and systems are also provided.

EP 4 012 363 A1

FIG. 7

**Description**

**TECHNICAL FIELD**

One or more embodiments relate generally to imaging and more particularly, for example, to infrared imaging-related uncertainty gauging systems and methods.

**BACKGROUND**

Imaging systems may include an array of detectors, with each detector functioning as a pixel to produce a portion of a two-dimensional image. There are a wide variety of image detectors, such as visible-light image detectors, infrared image detectors, or other types of image detectors that may be provided in an image detector array for capturing an image. As an example, a plurality of sensors may be provided in an image detector array to detect electromagnetic (EM) radiation at desired wavelengths. In some cases, such as for infrared imaging, readout of image data captured by the detectors may be performed in a time-multiplexed manner by a readout integrated circuit (ROIC). The image data that is read out may be communicated to other circuitry, such as for processing, storage, and/or display. In some cases, a combination of a detector array and an ROIC may be referred to as a focal plane array (FPA). Advances in process technology for FPAs and image processing have led to increased capabilities and sophistication of resulting imaging systems.

**SUMMARY**

In one or more embodiments, a method includes determining temperature data associated with infrared image data of a scene. The method further includes receiving at least one parameter associated with the infrared image data. The method further includes determining an uncertainty factor associated with the temperature data based on the at least one parameter.

In one or more embodiments, an infrared imaging system includes a processing circuit. The processing circuit is configured to determine temperature data associated with infrared image data of a scene. The processing circuit is further configured to receive at least one parameter associated with the infrared image data. The processing circuit is further configured to determine an uncertainty factor associated with the temperature data based on the at least one parameter.

The scope of the present disclosure is defined by the claims, which are incorporated into this section by reference. A more complete understanding of embodiments of the present disclosure will be afforded to those skilled in the art, as well as a realization of additional advantages thereof, by a consideration of the following detailed description of one or more embodiments. Reference will be made to the appended sheets of drawings that will first be described briefly.

**BRIEF DESCRIPTION OF THE DRAWINGS**

FIG. 1 illustrates a block diagram of an example imaging system in accordance with one or more embodiments of the present disclosure.

FIG. 2 illustrates a block diagram of an example image sensor assembly in accordance with one or more embodiments of the present disclosure.

FIG. 3 illustrates an example image sensor assembly in accordance with one or more embodiments of the present disclosure.

FIG. 4 illustrates an example system for facilitating uncertainty gauging for infrared imaging in accordance with one or more embodiments of the present disclosure.

FIG. 5 illustrates an example model to capture external factors related to radiation propagation from a scene to an infrared camera in accordance with one or more embodiments of the present disclosure.

FIG. 6 illustrates an example display screen with an infrared image displayed thereon in accordance with one or more embodiments of the present disclosure.

FIG. 7 illustrates a flow diagram of an example process for facilitating uncertainty gauging for infrared imaging in accordance with one or more embodiments of the present disclosure.

FIG. 8 illustrates a flow diagram of an example process for facilitating infrared image generation in accordance with one or more embodiments of the present disclosure.

Embodiments of the present disclosure and their advantages are best understood by referring to the detailed description that follows. It is noted that sizes of various components and distances between these components are not drawn to scale in the figures. It should be appreciated that like reference numerals are used to identify like elements illustrated in one or more of the figures.

## DETAILED DESCRIPTION

The detailed description set forth below is intended as a description of various configurations of the subject technology and is not intended to represent the only configurations in which the subject technology can be practiced. The appended drawings are incorporated herein and constitute a part of the detailed description. The detailed description includes specific details for the purpose of providing a thorough understanding of the subject technology. However, it will be clear and apparent to those skilled in the art that the subject technology is not limited to the specific details set forth herein and may be practiced using one or more embodiments. In one or more instances, structures and components are shown in block diagram form in order to avoid obscuring the concepts of the subject technology. One or more embodiments of the subject disclosure are illustrated by and/or described in connection with one or more figures and are set forth in the claims.

Various techniques are provided to facilitate uncertainty gauging for infrared imaging. In some embodiments, an imaging system includes a detector array and a readout circuit. The detector array includes detectors (e.g., also referred to as detector pixels, detector elements, or simply pixels). Each detector pixel detects incident EM radiation and generates image data (e.g., infrared image data) indicative of the detected EM radiation of a scene. In some embodiments, the detector array is used to detect infrared radiation (e.g., thermal infrared radiation). For pixels of an infrared image (e.g., thermal infrared image), each output value of a pixel may be represented/provided as and/or correspond to a temperature, digital count value, percentage of a full temperature range, or generally any value that can be mapped to the temperature. For example, a digital count value of 13,000 output by a pixel may represent a temperature of 160°C.

In some embodiments, an uncertainty factor may be used to provide an indication (e.g., a measure, a metric of confidence) of a radiometric accuracy associated with the image data captured by the detector array and/or data (e.g., image statistics) derived from (e.g., determined based on) such image data. The radiometric accuracy generally varies depending upon operating conditions of the detector array (e.g., and more generally the imaging system) at and around the time the image data is captured. In this regard, the uncertainty factor may also be considered an indication of operating conditions of the imaging system when the imaging system is used to capture the image data. The data derived from the image data may include an object recognition result(s), a temperature prediction(s), a mean temperature of the infrared image, a standard deviation and/or variance of the temperature of the pixels, a lowest temperature value among these pixels, a highest temperature value among these pixels, and/or other information.

The uncertainty factor may facilitate analysis of the scene and the infrared image data by a user(s) of the imaging system and/or by circuitry of the imaging system and/or other machine(s). In this regard, the uncertainty factor provides an indication to the user(s) and/or the machine(s) that may be beneficial for analyzing the image data, such as for safety applications (e.g., intruder detection, fire detection, temperature prediction, etc.). For example, if operating conditions associated with the imaging system are suboptimal, the uncertainty factor may be useful to indicate that the imaging system's measurements (e.g., temperature measurements) are potentially less accurate. In an aspect, the uncertainty factor may be referred to as an uncertainty metric, an uncertainty gauge, a confidence factor, a confidence metric, a confidence gauge, an accuracy factor, an accuracy gauge, an accuracy factor, and/or generally any similar term(s)/phrase(s).

In some cases, the uncertainty factor may be associated with the image data from a local portion of the scene, such as the infrared data values from pixels that form a spot meter of the imaging system. As an example, the uncertainty factor may provide a confidence associated with an average temperature determined based on the infrared data values from the pixels that form the spot meter. As another example, the uncertainty factor may provide a confidence that an object identified as a human in an infrared image is indeed a human. In some cases, the uncertainty factor may be associated with the infrared data values of the entire scene. For example, the uncertainty factor may provide a confidence associated with an average temperature determined based on the infrared data values from all the pixels of the detector array.

The uncertainty factor may be based on one or more parameters (e.g., also referred to as factors or variables) such as, by way of non-limiting examples, a target temperature, an imaging system temperature (e.g., camera temperature), a rate of temperature change of the imaging system, a temperature change since a calibration process (e.g., a most-recent flat-field correction process), and/or a gain mode/state (e.g., low gain operation mode or high gain operation mode) of the imaging system. Various of these parameters may be accessible to and/or determined/measured by the imaging system and/or other system to allow a determination (e.g., computation) of an uncertainty factor by the imaging system and/or other system.

The uncertainty factor may be qualitative or quantitative. As an example, a qualitative uncertainty factor associated with image data captured and/or generated by the imaging system may indicate that the image data is categorized as having highest confidence, high confidence, medium confidence, or no confidence. In some cases, the qualitative uncertainty factor may be represented using terms/phrases (e.g., "highest confidence," "no confidence") and/or numerals or symbols (e.g., the number 1 to represent "highest confidence," the number 4 to represent "no confidence"). As an example, a quantitative uncertainty factor associated with image data captured and/or generated by the imaging system may indicate that a certain temperature estimation generated based on the image data may be plus or minus a certain percentage and/or temperature value. In some cases, for a given set of image data, the imaging system and/or other system may be used to determine a qualitative uncertainty factor and/or a quantitative uncertainty factor. The user may provide an indication to receive a qualitative uncertainty factor, a quantitative uncertainty factor, or both.

Thus, using various embodiments, a user of the imaging system and/or a machine may be provided with awareness via uncertainty factors of when use conditions are favorable versus suboptimal for generating image data and/or deriving results based on the image data (e.g., deriving accurate temperature predictions). For example, an average user may not know when to be able to readily rely on the image data from the imaging system and when to be more cautious of the image data. In some safety applications, such as a system with a camera that warns the user if anything in the camera's field of view is unsafe to touch for example, the user benefits from knowing an uncertainty associated with the image data.

Although various embodiments for uncertainty gauging are described with respect to infrared imaging (e.g., thermal infrared imaging), uncertainty gauging may be applied to image data of other wavebands to facilitate analysis (e.g., user analysis and/or machine analysis) of captured radiation of these other wavebands. Various embodiments of methods and systems disclosed herein may be included in or implemented as various devices and systems such as visible-light imaging systems, infrared imaging systems, imaging systems having visible-light and infrared imaging capability, short-wave infrared (SWIR) imaging systems, light detection and ranging (LIDAR) imaging systems, radar detection and ranging (RADAR) imaging systems, millimeter wavelength (MMW) imaging systems, ultrasonic imaging systems, X-ray imaging systems, mobile digital cameras, video surveillance systems, video processing systems, or other systems or devices that may need to obtain image data in one or multiple portions of the EM spectrum.

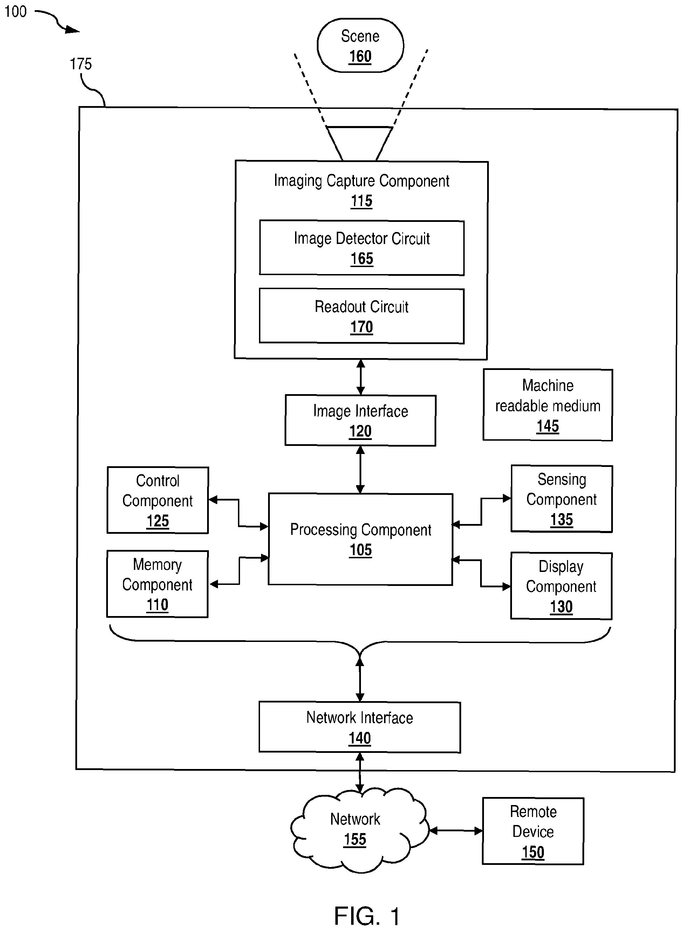

Referring now to the drawings, FIG. 1 illustrates a block diagram of an example imaging system 100 (e.g., an infrared camera, a tablet computer, a laptop, a personal digital assistant (PDA), a mobile device, a desktop computer, or other electronic device) in accordance with one or more embodiments of the present disclosure. Not all of the depicted components may be required, however, and one or more embodiments may include additional components not shown in the figure. Variations in the arrangement and type of the components may be made without departing from the spirit or scope of the claims as set forth herein. Additional components, different components, and/or fewer components may be provided.

The imaging system 100 may be utilized for capturing and processing images in accordance with an embodiment of the disclosure. The imaging system 100 may represent any type of imaging system that detects one or more ranges (e.g., wavebands) of EM radiation and provides representative data (e.g., one or more still image frames or video image frames). The imaging system 100 may include a housing that at least partially encloses components of the imaging system 100, such as to facilitate compactness and protection of the imaging system 100. For example, the solid box labeled 175 in FIG. 1 may represent a housing of the imaging system 100. The housing may contain more, fewer, and/or different components of the imaging system 100 than those depicted within the solid box in FIG. 1. In an embodiment, the imaging system 100 may include a portable device and may be incorporated, for example, into a vehicle or a non-mobile installation requiring images to be stored and/or displayed. The vehicle may be a land-based vehicle (e.g., automobile, truck), a naval-based vehicle, an aerial vehicle (e.g., unmanned aerial vehicle (UAV)), a space vehicle, or generally any type of vehicle that may incorporate (e.g., installed within, mounted thereon, etc.) the imaging system 100. In another example, the imaging system 100 may be coupled to various types of fixed locations (e.g., a home security mount, a campsite or outdoors mount, or other location) via one or more types of mounts.

The imaging system 100 includes, according to one implementation, a processing component 105, a memory component 110, an image capture component 115, an image interface 120, a control component 125, a display component 130, a sensing component 135, and/or a network interface 140. The processing component 105, according to various embodiments, includes one or more of a processor, a microprocessor, a central processing unit (CPU), a graphics processing unit (GPU), a single-core processor, a multi-core processor, a microcontroller, a programmable logic device (PLD) (e.g., field programmable gate array (FPGA)), an application specific integrated circuit (ASIC), a digital signal processing (DSP) device, or other logic device that may be configured, by hardwiring, executing software instructions, or a combination of both, to perform various operations discussed herein for embodiments of the disclosure. The processing component 105 may be configured to interface and communicate with the various other components (e.g., 110, 115, 120, 125, 130, 135, 140, etc.) of the imaging system 100 to perform such operations. For example, the processing component 105 may be configured to process captured image data received from the imaging capture component 115, store the image data in the memory component 110, and/or retrieve stored image data from the memory component 110. In one aspect, the processing component 105 may be configured to perform various system control operations (e.g., to control communications and operations of various components of the imaging system 100) and other image processing operations (e.g., data conversion, video analytics, etc.).

In some cases, the processing component 105 may perform operations such as non-uniformity correction (NUC) (e.g., flat field correction (FFC) or other calibration technique), spatial and/or temporal filtering, and/or radiometric conversion on the pixel values. As an example, an FFC calibration process (e.g., also referred to as an FFC event) may generally refer to a calibration technique performed in digital imaging to remove artifacts from frames that are caused by variations in pixel-to-pixel output of an image detector circuit 165 (e.g., variations between individual microbolometers of the image detector circuit 165) and/or by distortions in an optical path. In one case, the imaging system 100 may include an internal structure (e.g., shutter, lid, cover, paddle) to selectively block the image detector circuit 165. The structure may be used to provide/present a uniform scene to the detectors of the image detector circuit 165. The detectors are effectively blinded from the scene. In an aspect, the FFC event may involve capturing and averaging multiple frames while a shutter of the imaging system 100 is in a closed position to cover the image detector circuit 165, such that the image detector circuit 165 captures image data of the structure and is blind to a scene. In another case, the FFC event may include use of an external FFC source, with corrections applied to captured image data such that radiometric data in the images are correct when viewing the external FFC source. In general, the internal FFC source and/or external FFC source is at an accurately known temperature. Captured frames of the internal source (e.g., internal structure) and/or external source are accumulated and utilized to update FFC correction terms to be applied to frames output by a readout circuit 170 (e.g., by a processing circuit of the imaging system 100 that receives frames output by the readout circuit 170) and are generally not provided as an output of the imaging system. In some cases, calibration events may be performed periodically and/or upon user command.

The memory component 110 includes, in one embodiment, one or more memory devices configured to store data and information, including infrared image data and information. The memory component 110 may include one or more various types of memory devices including volatile and non-volatile memory devices, such as random access memory (RAM), dynamic RAM (DRAM), static RAM (SRAM), non-volatile random-access memory (NVRAM), read-only memory (ROM), programmable read-only memory (PROM), erasable programmable read-only memory (EPROM), electrically-erasable programmable read-only memory (EEPROM), flash memory, hard disk drive, and/or other types of memory. As discussed above, the processing component 105 may be configured to execute software instructions stored in the memory component 110 so as to perform method and process steps and/or operations. In one or more embodiments, such instructions, when executed by the processing component 105, may cause the imaging system 100 to perform operations to generate uncertainty factors. The processing component 105 and/or the image interface 120 may be configured to store in the memory component 110 images or digital image data captured by the image capture component 115. The processing component 105 may be configured to store processed still and/or video images in the memory component 110.

In some embodiments, a separate machine-readable medium 145 (e.g., a memory, such as a hard drive, a compact disk, a digital video disk, or a flash memory) may store the software instructions and/or configuration data which can be executed or accessed by a computer (e.g., a logic device or processor-based system) to perform various methods and operations, such as methods and operations associated with processing image data. In one aspect, the machine-readable medium 145 may be portable and/or located separate from the imaging system 100, with the stored software instructions and/or data provided to the imaging system 100 by coupling the machine-readable medium 145 to the imaging system 100 and/or by the imaging system 100 downloading (e.g., via a wired link and/or a wireless link) from the machine-readable medium 145. It should be appreciated that various modules may be integrated in software and/or hardware as part of the processing component 105, with code (e.g., software or configuration data) for the modules stored, for example, in the memory component 110.

The imaging system 100 may represent an imaging device, such as a video and/or still camera, to capture and process images and/or videos of a scene 160. In this regard, the image capture component 115 of the imaging system 100 may be configured to capture images (e.g., still and/or video images) of the scene 160 in a particular spectrum or modality. The image capture component 115 includes the image detector circuit 165 (e.g., a thermal infrared detector circuit) and the readout circuit 170 (e.g., an ROIC). For example, the image capture component 115 may include an IR imaging sensor (e.g., IR imaging sensor array) configured to detect IR radiation in the near, middle, and/or far IR spectrum and provide IR images (e.g., IR image data or signal) representative of the IR radiation from the scene 160. For example, the image detector circuit 165 may capture (e.g., detect, sense) IR radiation with wavelengths in the range from around 700 nm to around 2 mm, or portion thereof. For example, in some aspects, the image detector circuit 165 may be sensitive to (e.g., better detect) short-wave IR (SWIR) radiation, mid-wave IR (MWIR) radiation (e.g., EM radiation with wavelength of 2 $\mu$m to 5 $\mu$m), and/or long-wave IR (LWIR) radiation (e.g., EM radiation with wavelength of 7 $\mu$m to 14 $\mu$m), or any desired IR wavelengths (e.g., generally in the 0.7 $\mu$m to 14 $\mu$m range). In other aspects, the image detector circuit 165 may capture radiation from one or more other wavebands of the EM spectrum, such as visible-light, ultraviolet light, and so forth.

The image detector circuit 165 may capture image data (e.g., infrared image data) associated with the scene 160. To capture the image, the image detector circuit 165 may detect image data of the scene 160 (e.g., in the form of EM radiation) and generate pixel values of the image based on the scene 160. An image may be referred to as a frame or an image frame. In some cases, the image detector circuit 165 may include an array of detectors (e.g., also referred to as an array of pixels) that can detect radiation of a certain waveband, convert the detected radiation into electrical signals (e.g., voltages, currents, etc.), and generate the pixel values based on the electrical signals. Each detector in the array may capture a respective portion of the image data and generate a pixel value based on the respective portion captured by the detector. The pixel value generated by the detector may be referred to as an output of the detector. By way of non-limiting examples, each detector may be a photodetector, such as an avalanche photodiode, an infrared photodetector, a quantum well infrared photodetector, a microbolometer, or other detector capable of converting EM radiation (e.g., of a certain wavelength) to a pixel value. The array of detectors may be arranged in rows and columns. In an embodiment, the image detector circuit 165 may receive energy flux (e.g., thermal infrared energy flux) from an object(s) in the scene 160 and convert the energy flux to data values indicative of temperatures of the object(s) in the scene 160. The imaging system 100 may be radiometrically calibrated to ensure accurate conversion from the amount of energy received by the image detector circuit 165 to the data values generated by the image detector circuit 165. In some cases, an uncertainty factor may be based on parameters associated with the flux-to-temperature conversion.

The image may be, or may be considered, a data structure that includes pixels and is a representation of the image data associated with the scene 160, with each pixel having a pixel value that represents EM radiation emitted or reflected from a portion of the scene and received by a detector that generates the pixel value. Based on context, a pixel may refer to a detector of the image detector circuit 165 that generates an associated pixel value or a pixel (e.g., pixel location, pixel coordinate) of the image formed from the generated pixel values. In an embodiment, the image may be a thermal infrared image (e.g., also referred to as a thermal image) based on thermal infrared image data. Each pixel value of the thermal infrared image represents a temperature of a corresponding portion of the scene 160.

In an aspect, the pixel values generated by the image detector circuit 165 may be represented in terms of digital count values generated based on the electrical signals obtained from converting the detected radiation. For example, in a case that the image detector circuit 165 includes or is otherwise coupled to an analog-to-digital (ADC) circuit, the ADC circuit may generate digital count values based on the electrical signals. For an ADC circuit that can represent an electrical signal using 14 bits, the digital count value may range from 0 to 16,383. In such cases, the pixel value of the detector may be the digital count value output from the ADC circuit. In other cases (e.g., in cases without an ADC circuit), the pixel value may be analog in nature with a value that is, or is indicative of, the value of the electrical signal. As an example, for infrared imaging, a larger amount of IR radiation being incident on and detected by the image detector circuit 165 (e.g., an IR image detector circuit) is associated with higher digital count values and higher temperatures.

For infrared imaging, characteristics associated with the image detector circuit 165 (and its associated ADC circuit if any) may include, by way of non-limiting examples, a dynamic range, a minimum temperature that can be reliably represented, a maximum temperature that can be reliably represented, and a sensitivity. The dynamic range may be, or may be indicative of, a range (e.g., difference) between the minimum temperature and the maximum temperature that can be captured by the image detector circuit 165 and represented in an infrared image. In this regard, areas of the scene 160 that are below the minimum temperature may be buried in a noise floor of the imaging system 100 and appear washed out and/or noisy in the IR image. Areas of the scene 160 above the maximum temperature cause saturation in the infrared image, in which the areas that are saturated are represented in the same manner (e.g., using the same color value or the same grayscale value) as areas at the maximum temperature. For example, when the image detector circuit 165 generates digital count values using an ADC circuit, temperatures at or above the maximum temperature may all be mapped to the highest value that can be represented by the ADC circuit (e.g., 16,383 for a 14-bit ADC circuit), and temperatures at or below the minimum temperature may all be mapped to the lowest value (e.g., 0) that can be represented by the ADC circuit. In other words, the infrared image does not distinguish between areas above the maximum temperature and areas at the maximum temperature and does not distinguish between areas below the minimum temperature and areas at the minimum temperature.

The readout circuit 170 may be utilized as an interface between the image detector circuit 165 that detects the image data and the processing component 105 that processes the detected image data as read out by the readout circuit 170, with communication of data from the readout circuit 170 to the processing component 105 facilitated by the image interface 120. An image capturing frame rate may refer to the rate (e.g., images per second) at which images are detected in a sequence by the image detector circuit 165 and provided to the processing component 105 by the readout circuit 170. The readout circuit 170 may read out the pixel values generated by the image detector circuit 165 in accordance with an integration time (e.g., also referred to as an integration period).

In various embodiments, a combination of the image detector circuit 165 and the readout circuit 170 may be, may include, or may together provide an FPA. In some aspects, the image detector circuit 165 may be a thermal image detector circuit that includes an array of microbolometers, and the combination of the image detector circuit 165 and the readout circuit 170 may be referred to as a microbolometer FPA. In some cases, the array of microbolometers may be arranged in rows and columns. The microbolometers may detect IR radiation and generate pixel values based on the detected IR radiation. For example, in some cases, the microbolometers may be thermal IR detectors that detect IR radiation in the form of heat energy and generate pixel values based on the amount of heat energy detected. The microbolometers may absorb incident IR radiation and produce a corresponding change in temperature in the microbolometers. The change in temperature is associated with a corresponding change in resistance of the microbolometers. With each microbolometer functioning as a pixel, a two-dimensional image or picture representation of the incident IR radiation can be generated by translating the changes in resistance of each microbolometer into a time-multiplexed electrical signal. The translation may be performed by the ROIC. The microbolometer FPA may include IR detecting materials such as amorphous silicon (a-Si), vanadium oxide ($VO_x$), a combination thereof, and/or other detecting material(s). In an aspect, for a microbolometer FPA, the integration time may be, or may be indicative of, a time interval during which the microbolometers are biased. In this case, a longer integration time may be associated with higher gain of the IR signal, but not more IR radiation being collected. The IR radiation may be collected in the form of heat energy by the microbolometers.

In some cases, the imaging capture component 115 may include one or more filters adapted to pass radiation of some wavelengths but substantially block radiation of other wavelengths. For example, the imaging capture component 115 may be an IR imaging device that includes one or more filters adapted to pass IR radiation of some wavelengths while substantially blocking IR radiation of other wavelengths (e.g., MWIR filters, thermal IR filters, and narrow-band filters). In this example, such filters may be utilized to tailor the imaging capture component 115 for increased sensitivity to a desired band of IR wavelengths. In an aspect, an IR imaging device may be referred to as a thermal imaging device when the IR imaging device is tailored for capturing thermal IR images. Other imaging devices, including IR imaging devices tailored for capturing infrared IR images outside the thermal range, may be referred to as non-thermal imaging devices.

In one specific, not-limiting example, the image capture component 115 may include an IR imaging sensor having an FPA of detectors responsive to IR radiation including near infrared (NIR), SWIR, MWIR, LWIR, and/or very-long wave IR (VLWIR) radiation. In some other embodiments, alternatively or in addition, the image capture component 115 may include a complementary metal oxide semiconductor (CMOS) sensor or a charge-coupled device (CCD) sensor that can be found in any consumer camera (e.g., visible light camera).

Other imaging sensors that may be embodied in the image capture component 115 include a photonic mixer device (PMD) imaging sensor or other time of flight (ToF) imaging sensor, LIDAR imaging device, RADAR imaging device, millimeter imaging device, positron emission tomography (PET) scanner, single photon emission computed tomography (SPECT) scanner, ultrasonic imaging device, or other imaging devices operating in particular modalities and/or spectra. It is noted that for some of these imaging sensors that are configured to capture images in particular modalities and/or spectra (e.g., infrared spectrum, etc.), they are more prone to produce images with low frequency shading, for example, when compared with a typical CMOS-based or CCD-based imaging sensors or other imaging sensors, imaging scanners, or imaging devices of different modalities.

The images, or the digital image data corresponding to the images, provided by the image capture component 115 may be associated with respective image dimensions (also referred to as pixel dimensions). An image dimension, or pixel dimension, generally refers to the number of pixels in an image, which may be expressed, for example, in width multiplied by height for two-dimensional images or otherwise appropriate for relevant dimension or shape of the image. Thus, images having a native resolution may be resized to a smaller size (e.g., having smaller pixel dimensions) in order to, for example, reduce the cost of processing and analyzing the images. Filters (e.g., a non-uniformity estimate) may be generated based on an analysis of the resized images. The filters may then be resized to the native resolution and dimensions of the images, before being applied to the images.

The image interface 120 may include, in some embodiments, appropriate input ports, connectors, switches, and/or circuitry configured to interface with external devices (e.g., a remote device 150 and/or other devices) to receive images (e.g., digital image data) generated by or otherwise stored at the external devices. In an aspect, the image interface 120 may include a serial interface and telemetry line for providing metadata associated with image data. In some cases, the metadata may include information associated with the image data (e.g., capture thereof) that can be used to generate an uncertainty factor. The received images or image data may be provided to the processing component 105. In this regard, the received images or image data may be converted into signals or data suitable for processing by the processing component 105. For example, in one embodiment, the image interface 120 may be configured to receive analog video data and convert it into suitable digital data to be provided to the processing component 105.

The image interface 120 may include various standard video ports, which may be connected to a video player, a video camera, or other devices capable of generating standard video signals, and may convert the received video signals into digital video/image data suitable for processing by the processing component 105. In some embodiments, the image interface 120 may also be configured to interface with and receive images (e.g., image data) from the image capture component 115. In other embodiments, the image capture component 115 may interface directly with the processing component 105.

In some embodiments, the imaging system 100 may be selectively operated in one of multiple operation modes (e.g., also referred to as operation states). For example, imaging modes available to the imaging system 100 may include a low gain mode (e.g., also referred to as low gain state) or a high gain mode (e.g., also referred to as high gain state). The high gain mode may be associated with higher sensitivity than the low gain mode, whereas the low gain mode may be associated with higher dynamic range (e.g., a broader temperature range) than the high gain mode. The low gain mode may have a lower minimum temperature and/or a higher maximum temperature than the high gain mode. In some cases, the high gain mode may utilize a longer integration time and the low gain mode may utilize a shorter integration time. An infrared image generated using the high gain mode or the low gain mode may be referred to as a high gain infrared image or a low gain infrared image, respectively.

The imaging system 100 may transition between operating in the low gain mode and high gain mode. In some cases, a transition from a high gain mode to a low gain mode may occur (e.g., autonomously by the imaging system 100 or based on user input) when the number of pixels saturating and/or nearing the saturation temperature (e.g., exceeding 90% of the saturation temperature) reaches a threshold number of pixels, whereas a transition from a low gain mode to a high gain mode may occur when the number of pixels not saturating exceeds a threshold number of pixels. For example, for the imaging system 100 operated in the high gain mode, the imaging system 100 may transition from the high gain mode to the low gain mode when a threshold number of pixels generate pixel values exceeding a high-to-low saturation threshold value, and may otherwise remain in the high gain mode if these conditions are not satisfied. The imaging system 100 may transition from the low gain mode to the high gain mode when a threshold number of pixels generate pixel values below a low-to-high saturation threshold value, and may otherwise remain in the low gain mode if these conditions are not satisfied.

In an aspect, while the low gain mode and the high gain mode encompass the same output range (e.g., 0 to 65,535 when a 16-bit ADC circuit is used), the low gain mode is associated with a different temperature range than the high gain mode. For example, in the 14-bit case (e.g., 0 to 16,383), a count value of 12,000 generated by a pixel operated in the low gain mode may be indicative of a temperature of 400°C, whereas the same count value of 12,000 generated by a pixel operated in the high gain mode may be indicative of a temperature of 120°C. In an aspect, in the high gain mode, the pixels of the image detector circuit 165 may have a saturation temperature between around 150°C and around 250°C. In the low gain mode operation, the pixels may have a saturation temperature between around 500°C and around 600°C.

Utilizing one or more of the imaging modes may facilitate accommodation of scenes of varying irradiance/temperature levels. The use of multiple image capture modes may facilitate capture of image scenes that involve large variations in temperature by the image capture component 115. The high gain mode may provide higher sensitivity but saturate when imaging relatively hot (or cold) objects, whereas the low gain mode may provide greater scene temperature range but lower sensitivity.

In some embodiments, the imaging system 100 may be operated in other modes aside from the high gain and low gain modes, such as a medium gain mode with sensitivity and/or dynamic range between those of the high gain mode and low gain mode. Additional imaging modes may allow for finer tuning and/or extension of the sensitivity, dynamic range, minimum temperature, and/or maximum temperature to accommodate various scenes/applications that may be encountered by the imaging system 100. Various components of the imaging system 100 may include a respective pipeline for each operation mode. For example, the imaging capture component 115 (e.g., the readout circuit 170 of the imaging capture component 115), the image interface 120, the processing component 105, and/or other components of the imaging system 100 may include different pipelines to support the different operation modes. Additional examples of imaging systems selectively operable in multiple modes of operation are provided in U.S. Patent Application No. 16/511,401.

The control component 125 includes, in one embodiment, a user input and/or an interface device, such as a rotatable knob (e.g., potentiometer), push buttons, slide bar, keyboard, and/or other devices, that is adapted to generate a user input control signal. The processing component 105 may be configured to sense control input signals from a user via the control component 125 and respond to any sensed control input signals received therefrom. The processing component 105 may be configured to interpret such a control input signal as a value, as generally understood by one skilled in the art. In one embodiment, the control component 125 may include a control unit (e.g., a wired or wireless handheld control unit) having push buttons adapted to interface with a user and receive user input control values. In one implementation, the push buttons of the control unit may be used to control various functions of the imaging system 100, such as autofocus, menu enable and selection, field of view, brightness, contrast, noise filtering, image enhancement, and/or various other features of an imaging system or camera.

The display component 130 includes, in one embodiment, an image display device (e.g., a liquid crystal display (LCD)) or various other types of generally known video displays or monitors. The processing component 105 may be configured to display image data and information on the display component 130. The processing component 105 may be configured to retrieve image data and information from the memory component 110 and display any retrieved image data and information on the display component 130. The display component 130 may include display circuitry, which may be utilized by the processing component 105 to display image data and information. The display component 130 may be adapted to receive image data and information directly from the image capture component 115, processing component 105, and/or image interface 120, or the image data and information may be transferred from the memory component 110 via the processing component 105. In an embodiment, the display component 130 may display graphical user interfaces appropriate to request and receive user input related to displaying uncertainty factors.

The sensing component 135 includes, in one embodiment, one or more sensors of various types, depending on the application or implementation requirements, as would be understood by one skilled in the art. Sensors of the sensing component 135 provide data and/or information to at least the processing component 105. In one aspect, the processing component 105 may be configured to communicate with the sensing component 135. In various implementations, the sensing component 135 may provide information regarding environmental conditions, such as outside temperature, lighting conditions (e.g., day, night, dusk, and/or dawn), humidity level, specific weather conditions (e.g., sun, rain, and/or snow), distance (e.g., laser rangefinder or time-of-flight camera), and/or whether a tunnel or other type of enclosure has been entered or exited. The sensing component 135 may represent conventional sensors as generally known by one skilled in the art for monitoring various conditions (e.g., environmental conditions) that may have an effect (e.g., on the image appearance) on the image data provided by the image capture component 115. In an aspect, the sensing component 135 may include one or more temperature sensors to detect/monitor a temperature of one or more components of the imaging system 100. For example, one of the temperature sensors may detect/monitor a temperature of the image detector circuit 165.

In some implementations, the sensing component 135 (e.g., one or more sensors) may include devices that relay information to the processing component 105 via wired and/or wireless communication. For example, the sensing component 135 may be adapted to receive information from a satellite, through a local broadcast (e.g., radio frequency (RF)) transmission, through a mobile or cellular network and/or through information beacons in an infrastructure (e.g., a transportation or highway information beacon infrastructure), or various other wired and/or wireless techniques. In some embodiments, the processing component 105 can use the information (e.g., sensing data) retrieved from the sensing component 135 to modify a configuration of the image capture component 115 (e.g., adjusting a light sensitivity level, adjusting a direction or angle of the image capture component 115, adjusting an aperture, etc.).

In some embodiments, various components of the imaging system 100 may be distributed and in communication with one another over a network 155. In this regard, the imaging system 100 may include a network interface 140 configured to facilitate wired and/or wireless communication among various components of the imaging system 100 over the network 155. In such embodiments, components may also be replicated if desired for particular applications of the imaging system 100. That is, components configured for same or similar operations may be distributed over a network. Further, all or part of any one of the various components may be implemented using appropriate components of the remote device 150 (e.g., a conventional digital video recorder (DVR), a computer configured for image processing, and/or other device) in communication with various components of the imaging system 100 via the network interface 140 over the network 155, if desired. Thus, for example, all or part of the processing component 105, all or part of the memory component 110, and/or all of part of the display component 130 may be implemented or replicated at the remote device 150. In some embodiments, the imaging system 100 may not include imaging sensors (e.g., image capture component 115), but instead receive images or image data from imaging sensors located separately and remotely from the processing component 105 and/or other components of the imaging system 100. It will be appreciated that many other combinations of distributed implementations of the imaging system 100 are possible, without departing from the scope and spirit of the disclosure.

Furthermore, in various embodiments, various components of the imaging system 100 may be combined and/or implemented or not, as desired or depending on the application or requirements. In one example, the processing component 105 may be combined with the memory component 110, image capture component 115, image interface 120, display component 130, sensing component 135, and/or network interface 140. In another example, the processing component 105 may be combined with the image capture component 115, such that certain functions of processing component 105 are performed by circuitry (e.g., a processor, a microprocessor, a logic device, a microcontroller, etc.) within the image capture component 115.

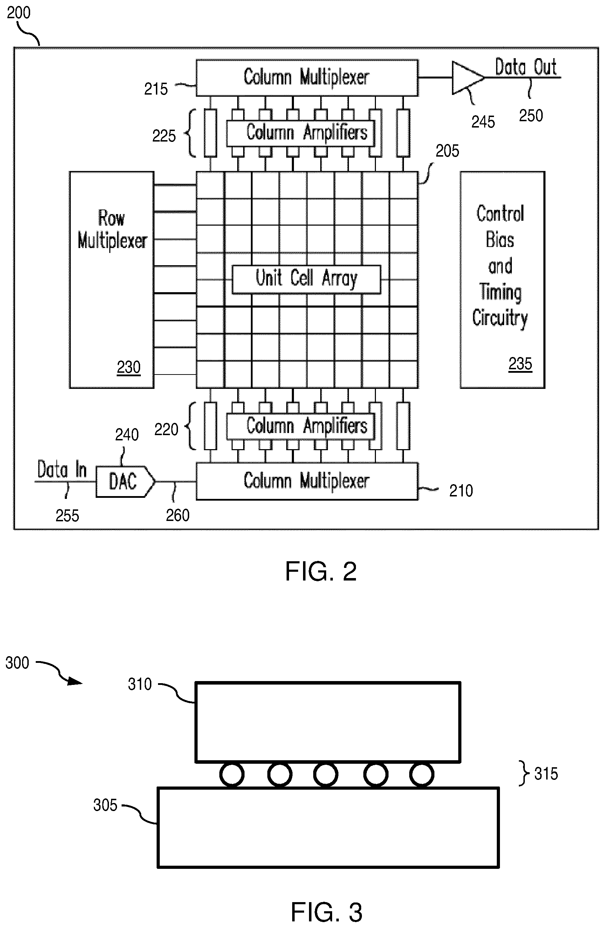

FIG. 2 illustrates a block diagram of an example image sensor assembly 200 in accordance with one or more embodiments of the present disclosure. Not all of the depicted components may be required, however, and one or more embodiments may include additional components not shown in the figure. Variations in the arrangement and type of the components may be made without departing from the spirit or scope of the claims as set forth herein. Additional components, different components, and/or fewer components may be provided. In an embodiment, the image sensor assembly 200 may be an FPA, for example, implemented as the image capture component 115 of FIG. 1.

The image sensor assembly 200 includes a unit cell array 205, column multiplexers 210 and 215, column amplifiers 220 and 225, a row multiplexer 230, control bias and timing circuitry 235, a digital-to-analog converter (DAC) 240, and a data output buffer 245. In some aspects, operations of and/or pertaining to the unit cell array 205 and other components may be performed according to a system clock and/or synchronization signals (e.g., line synchronization (LSYNC) signals). The unit cell array 205 includes an array of unit cells. In an aspect, each unit cell may include a detector (e.g., a pixel) and interface circuitry. The interface circuitry of each unit cell may provide an output signal, such as an output voltage or an output current, in response to a detection signal (e.g., detection current, detection voltage) provided by the detector of the unit cell. The output signal may be indicative of the magnitude of EM radiation received by the detector and may be referred to as image pixel data or simply image data. The column multiplexer 215, column amplifiers 220, row multiplexer 230, and data output buffer 245 may be used to provide the output signals from the unit cell array 205 as a data output signal on a data output line 250. The output signals on the data output line 250 may be provided to components downstream of the image sensor assembly 200, such as processing circuitry (e.g., the processing component 105 of FIG. 1), memory (e.g., the memory component 110 of FIG. 1), display device (e.g., the display component 130 of FIG. 1), and/or other component to facilitate processing, storage, and/or display of the output signals. The data output signal may be an image formed of the pixel values for the image sensor assembly 200. In this regard, the column multiplexer 215, the column amplifiers 220, the row multiplexer 230, and the data output buffer 245 may collectively provide an ROIC (or portion thereof) of the image sensor assembly 200. In an aspect, the interface circuitry may be considered part of the ROIC, or may be considered an interface between the detectors and the ROIC. In an embodiment, components of the image sensor assembly 200 may be implemented such that the unit cell array 205 is hybridized to (e.g., bonded to, joined to, mated to) the ROIC. An example of such a hybridization is described with respect to FIG. 3.

The column amplifiers 225 may generally represent any column processing circuitry as appropriate for a given application (analog and/or digital), and is not limited to amplifier circuitry for analog signals. In this regard, the column amplifiers 225 may more generally be referred to as column processors in such an aspect. Signals received by the column amplifiers 225, such as analog signals on an analog bus and/or digital signals on a digital bus, may be processed according to the analog or digital nature of the signal. As an example, the column amplifiers 225 may include circuitry for processing digital signals. As another example, the column amplifiers 225 may be a path (e.g., no processing) through which digital signals from the unit cell array 205 traverses to get to the column multiplexer 215. As another example, the column amplifiers 225 may include an ADC for converting analog signals to digital signals (e.g., to obtain digital count values). These digital signals may be provided to the column multiplexer 215.

Each unit cell may receive a bias signal (e.g., bias voltage, bias current) to bias the detector of the unit cell to compensate for different response characteristics of the unit cell attributable to, for example, variations in temperature, manufacturing variances, and/or other factors. For example, the control bias and timing circuitry 235 may generate the bias signals and provide them to the unit cells. By providing appropriate bias signals to each unit cell, the unit cell array 205 may be effectively calibrated to provide accurate image data in response to light (e.g., IR light) incident on the detectors of the unit cells. In an aspect, the control bias and timing circuitry 235 may be, may include, or may be a part of, a logic circuit.

The control bias and timing circuitry 235 may generate control signals for addressing the unit cell array 205 to allow access to and readout of image data from an addressed portion of the unit cell array 205. The unit cell array 205 may be addressed to access and readout image data from the unit cell array 205 row by row, although in other implementations the unit cell array 205 may be addressed column by column or via other manners.

The control bias and timing circuitry 235 may generate bias values and timing control voltages. In some cases, the DAC 240 may convert the bias values received as, or as part of, data input signal on a data input signal line 255 into bias signals (e.g., analog signals on analog signal line(s) 260) that may be provided to individual unit cells through the operation of the column multiplexer 210, column amplifiers 220, and row multiplexer 230. For example, the DAC 240 may drive digital control signals (e.g., provided as bits) to appropriate analog signal levels for the unit cells. In some technologies, a digital control signal of 0 or 1 may be driven to an appropriate logic low voltage level or an appropriate logic high voltage level, respectively. In another aspect, the control bias and timing circuitry 235 may generate the bias signals (e.g., analog signals) and provide the bias signals to the unit cells without utilizing the DAC 240. In this regard, some implementations do not include the DAC 240, data input signal line 255, and/or analog signal line(s) 260. In an embodiment, the control bias and timing circuitry 235 may be, may include, may be a part of, or may otherwise be coupled to the processing component 105 and/or imaging capture component 115 of FIG. 1.

In an embodiment, the image sensor assembly 200 may be implemented as part of an imaging system (e.g., 100). In addition to the various components of the image sensor assembly 200, the imaging system may also include one or more processors, memories, logic, displays, interfaces, optics (e.g., lenses, mirrors, beamsplitters), and/or other components as may be appropriate in various implementations. In an aspect, the data output signal on the data output line 250 may be provided to the processors (not shown) for further processing. For example, the data output signal may be an image formed of the pixel values from the unit cells of the image sensor assembly 200. The processors may perform operations such as non-uniformity correction (e.g., FFC or other calibration technique), spatial and/or temporal filtering, and/or other operations. The images (e.g., processed images) may be stored in memory (e.g., external to or local to the imaging system) and/or displayed on a display device (e.g., external to and/or integrated with the imaging system). The various components of FIG. 2 may be implemented on a single chip or multiple chips. Furthermore, while the various components are illustrated as a set of individual blocks, various of the blocks may be merged together or various blocks shown in FIG. 2 may be separated into separate blocks.

It is noted that in FIG. 2 the unit cell array 205 is depicted as an 8×8 (e.g., 8 rows and 8 columns of unit cells). However, the unit cell array 205 may be of other array sizes. By way of non-limiting examples, the unit cell array 205 may include 512×512 (e.g., 512 rows and 512 columns of unit cells), 1024×1024, 2048×2048, 4096×4096, 8192×8192, and/or other array sizes. In some cases, the array size may have a row size (e.g., number of detectors in a row) different from a column size (e.g., number of detectors in a column). Examples of frame rates may include 30 Hz, 60 Hz, and 120 Hz. In an aspect, each unit cell of the unit cell array 205 may represent a pixel.

In an embodiment, components of the image sensor assembly 200 may be implemented such that a detector array is hybridized to (e.g., bonded to) a readout circuit. For example, FIG. 3 illustrates an example image sensor assembly 300 in accordance with one or more embodiments of the present disclosure. Not all of the depicted components may be required, however, and one or more embodiments may include additional components not shown in the figure. Variations in the arrangement and type of the components may be made without departing from the spirit or scope of the claims as set forth herein. Additional components, different components, and/or fewer components may be provided. In an embodiment, the image sensor assembly 300 may be, may include, or may be a part of the image sensor assembly 200.

The image sensor assembly 300 includes a device wafer 305, a readout circuit 310, and contacts 315 to bond (e.g., mechanically and electrically bond) the device wafer 305 to the readout circuit 310. The device wafer 305 may include detectors (e.g., the unit cell array 205). The contacts 315 may bond the detectors of the device wafer 305 and the readout circuit 310. The contacts 315 may include conductive contacts of the detectors of the device wafer 305, conductive contacts of the readout circuit 310, and/or metallic bonds between the conductive contacts of the detectors and the conductive contacts of the readout circuit 310. In one embodiment, the device wafer 305 may be bump-bonded to the readout circuit 310 using bonding bumps (e.g., indium bumps). The bonding bumps may be formed on the device wafer 305 and/or the readout circuit 310 to allow connection between the device wafer 305 and the readout circuit 310. In an aspect, hybridizing the device wafer 305 to the readout circuit 310 may refer to bonding the device wafer 305 (e.g., the detectors of the device wafer 305) to the readout circuit 310 to mechanically and electrically bond the device wafer 305 and the readout circuit 310.

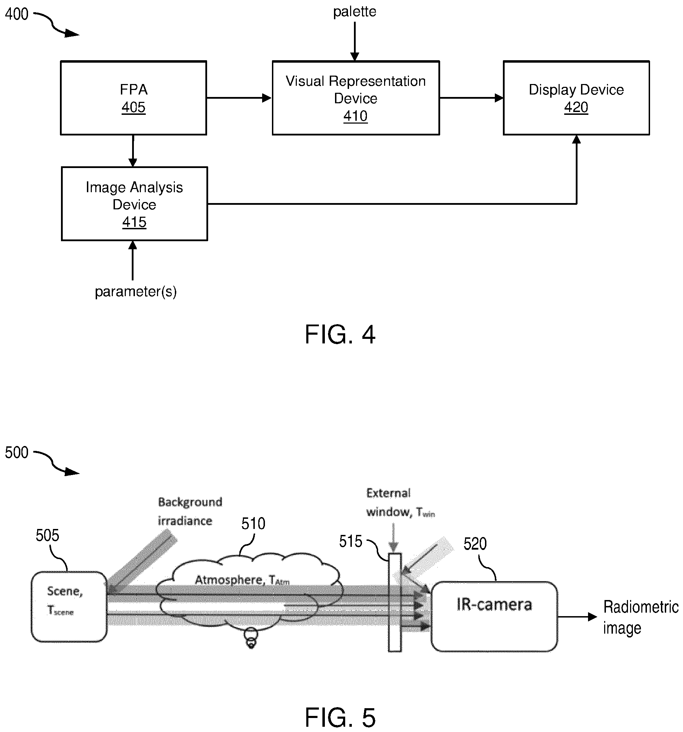

FIG. 4 illustrates an example system 400 for facilitating uncertainty gauging for infrared imaging in accordance with one or more embodiments of the present disclosure. Not all of the depicted components may be required, however, and one or more embodiments may include additional components not shown in the figure. Variations in the arrangement and type of the components may be made without departing from the spirit or scope of the claims as set forth herein. Additional components, different components, and/or fewer components may be provided.

The system 400 includes an FPA 405, a visual representation device 410 (e.g., also referred to as a colorization device), an image analysis device 415, and a display device 420. In an embodiment, the FPA 405, the visual representation device 410, and/or the image analysis device 415 may be implemented using one or more processing circuits on a single chip or distributed across two or more chips.

The FPA 405 includes a detector array and an ROIC. The FPA 405 receives light from a scene and generates infrared data values (e.g., thermal infrared data values) based on the light (e.g., infrared component of the light). For example, the FPA 405 may include or may be coupled to an ADC circuit that generates infrared data values based on infrared radiation. A 16-bit ADC circuit may generate infrared data values that range from 0 to 65,535. In an aspect, the detector array is an infrared detector array (e.g., microbolometer array) that detects IR radiation (e.g., thermal IR radiation). In an aspect, the FPA 405 may generate a header associated with the infrared data values. The header may include parameters associated with capture of the infrared data values and/or operation of the FPA 405 when the infrared data values are captured. Such data may be used by the image analysis device 415 to generate an uncertainty factor. In some cases, the header may be provided by the FPA 405 to other components via a serial interface and telemetry line. The data provided in the header may include, by way of non-limiting examples, a temperature $T_{FPA}$ of the FPA 405 when the infrared data values are captured, an ambient temperature when the infrared data values are captured, a temperature stability of the FPA 405 around when the infrared data values are captured (e.g., a rate of a change in the temperature $T_{FPA}$ over a period of time around when the infrared data values are captured), a temperature of a calibration source of the FPA 405, a time since a start-up of the FPA 405, an atmospheric transmissivity, and a window transmissivity. In an embodiment, the FPA 405 may be implemented by the imaging capture component 115.

The visual representation device 410 receives the infrared data values from the FPA 405 and a palette (or an indication of the palette) and applies the palette to the infrared data values to generate an infrared image. The visual representation device 410 may include a selection (e.g., user selection, default selection) of the palette. In an aspect, applying the palette may be referred to as colorizing (e.g., using color values and/or grayscale values) the infrared data values. In an aspect, the visual representation device 410 may generate a header and/or adjust a header from the FPA 405 to identify, in the header, the palette applied to the infrared data values. The header(s) may be appended to the infrared image. It is noted that, although the FPA 405 and the visual representation device 410 are depicted as separate components in FIG. 4, the visual representation device 410 may be, or may be considered to be, part of the FPA 405, such that the FPA 405 outputs infrared images generated by applying a palette to infrared data values captured by the FPA 405. In an embodiment, the visual representation device 410 may be implemented by the processing component 105 of FIG. 1.

The image analysis device 415 receives data and generates an uncertainty factor based on the received data. The data may include data from the FPA 405, data from other components of an imaging system (e.g., camera) that includes the FPA 405, and/or data from sources external to the imaging system. In some cases, at least a portion of the data used by the image analysis device 415 to generate the uncertainty factor may be contained in a header generated by the FPA 405 to provide data (e.g., metadata) associated with the infrared data values captured by the FPA 405. The header may be provided by the FPA 405 to the image analysis device 415 via a serial interface and telemetry line. In some cases, the image analysis device 415 may generate temperature data based on the infrared data values. For example, the temperature data may include temperature determination results, object recognition results, and/or others.

Radiometric accuracy associated with the FPA 405 (e.g., and more generally the imaging system that includes the FPA 405) generally vary depending upon operating conditions. As such, in some embodiments, the uncertainty factor generated by the image analysis device 415 may be based on, and thus may be indicative of, operating conditions of the FPA 405 (e.g., and more generally the imaging system) when the infrared data values are captured by the FPA 405. Equivalently, the uncertainty factor may be indicative of a confidence associated with radiometric data associated with the FPA 405. The radiometric data may include the infrared data values captured by the FPA 405 and/or data/results (e.g., image temperature statistics, temperature determination results, object recognition results, etc.) derived/generated based on the infrared data values.

In some cases, the uncertainty factor may be associated with the infrared data values from a local portion of a scene, such as the infrared data values from pixels that form a spot meter of the imaging system. As an example, the uncertainty factor may provide a confidence associated with an average temperature determined based on the infrared data values from the pixels that form the spot meter. As another example, the uncertainty factor may provide a confidence that an object identified as a human in the infrared image is indeed a human. In some cases, the uncertainty factor may be associated the infrared data values of the entire scene. For example, the uncertainty factor may provide a confidence associated with an average temperature determined based on the infrared data values from all the pixels of the FPA 405.

In some embodiments, the uncertainty factor may be based on various temperatures associated with the FPA 405 and/or operation thereof. By way of non-limiting examples, the uncertainty factor may be based on the temperature $T_{\text{FPA}}$ of the FPA 405, an ambient temperature, a scene temperature, a temperature of a calibration source (e.g., an internal shutter, an external source), a rate in a change in the temperature of the FPA 405 over time (e.g., whether the FPA 405 is in steady state operation), a temperature of the FPA 405 during a previous calibration event (e.g., FFC event), and/or various of these temperatures in relation to other temperatures. A weight associated with various of these factors may depend on a gain state (e.g., low gain mode or high gain mode) of the imaging system.

Various of these parameters pertain to an imaging system's gain error and/or an imaging system's offset error. The uncertainty factor may be based on these parameters. The imaging system's offset error may be due to the imaging system responding to not just a scene but also its own temperature (e.g., self-heating of the imaging system). One or more of these parameters may be contribute to errors due to imperfections in a thermal model(s) of the FPA 405 and/or the imaging system. In some cases, such imperfections may be due to extrapolations of the thermal model(s).

In an embodiment, the imaging system's gain error, and thus the uncertainty factor determined based in part on the gain error, may be based on a target temperature $T_{tgt}$, a temperature of a calibration source, the temperature $T_{\text{FPA}}$ of the FPA 405, and/or a gain state of the imaging system. The gain error may be based on (e.g., proportional to) the target temperature in relation to the temperature $T_{calibSource}$ of the source used by the imaging system for calibration. For example, the gain error may be based on (e.g., proportional to) a difference between the target temperature $T_{tgt}$ and the calibration source's temperature $T_{calibSource}$. The calibration source's temperature $T_{calibSource}$ is generally accurately known. In an aspect, the target temperature $T_{tgt}$ may be a temperature characteristic of the entire scene. For example, the target temperature may be an average temperature determined based on the image data from the detectors of the FPA 405. In an aspect, the target temperature $T_{tgt}$ may be a temperature characteristic of a local portion of the scene. In some cases, a spot meter may define the local portion of the scene. For example, the target temperature $T_{tgt}$ may be an average temperature determined based on the image data from a subset of the detectors of the FPA 405 associated with the local portion. The calibration source may be a source internal to the imaging system, such as a structure (e.g., shutter, paddle) of the imaging system to block the detectors of the FPA 405, or a source external to the imaging system. The source external to the imaging system may be a reference object in a scene with a known temperature. For example, the reference object may be a blackbody object.

With regard to the temperature $T_{FPA}$, the imaging system may store and/or access a responsivity lookup table associated with the FPA 405. Boundary values of the lookup table may be associated with a higher likelihood of gain error (e.g., due to extrapolation errors). In one case, a gain error may be based on the current temperature $T_{FPA}$ of the FPA 405 in relation to a temperature of the FPA 405 during a gain calibration of the FPA 405. For example, the gain error may be based on a difference between the current temperature $T_{FPA}$ and the temperature of the FPA 405 during the gain calibration. For the gain state of the imaging system, a low gain state may be associated with a higher likelihood of gain error. The low gain state may be associated with a higher likelihood of gain error due to a worse signal-to-noise ratio (SNR) during a calibration process to generate a responsivity lookup table.

In an embodiment, the imaging system's offset error, and thus the uncertainty factor determined based in part on the offset error, may be based on the temperature $T_{FPA}$ of the FPA 405, a temperature $T_{calib}$ at which a previous calibration event (e.g., FFC event) was performed, a temperature stability associated with the imaging system, an internal FFC associated with the imaging system, a target location in the imaging system's field of view, a time since a start-up of the FPA 405, and/or a temperature distance. The uncertainty factor may be based on (e.g., proportional to) a difference between the temperatures $T_{FPA}$ and $T_{calib}$. With regard to temperature stability, a greater likelihood of offset error may be present when temperature stability is lower (e.g., more temperature slewing). With regard to the internal FFC, an imperfect lens and/or shutter temperature estimate may contribute to the offset error. With regard to a target location, a greater likelihood of non-uniformity may be present the farther away a target (e.g., a spot meter location) is from a center of the imaging system's field of view. For the time since the start-up of the FPA 405, a greater likelihood of offset error (e.g., due to thermal model imperfections) may be present as a time since the start-up of the FPA 405 increases. With regard to a temperature distance, a greater likelihood of stray light contribution may be present for flood targets.

In some aspects, the uncertainty factor may be based on external factors related to radiation propagation to the FPA 405, such as a window transmission, an atmospheric transmission, and a target emissivity. As an example, FIG. 5 illustrates an example model 500 to capture these external factors related to radiation propagation from a scene 505 to an infrared camera 520 in accordance with one or more embodiments of the present disclosure. In an embodiment, the infrared camera 520 may be, may include, or may be a part of, the imaging system that includes the FPA 405. The model 500 generates an infrared image (e.g., also referred to as a radiometric image) based on the scene 505 captured by the infrared camera 520. The model 500 factors in an atmosphere 510 and a window 515 between the scene 505 and the infrared camera 520. For example, the atmosphere 510 and the window 515 may be in front of an array of detectors (e.g., microbolometers) of the infrared camera 520. As such, the model 500 accounts for and/or may be adjusted to account for additional components (e.g., optical elements such as lenses and/or protective windows) provided between an imaged scene and the infrared camera 520 to account for radiometric variations attributable to such additional components. An incident radiation onto the infrared camera 520 may be given by:

$$S = \tau_{win}\left(\tau_{atm} \cdot \left[\varepsilon W(T_{scene}) + (1 - \varepsilon)W(T_{Bkg})\right]\right) + (1 - \tau_{atm})W(T_{atm}) + r_{win}W(T_{refl})$$
$$+ (1 - \tau_{win} - r_{win})W(T_{win})$$

Table 1 provides the notation and description used in the above equation and in FIG. 5.

Table 1: Notation and Description

| Notation | Description |
|---|---|
| $S$ | Value of a digital video in counts |
| $\varepsilon$ | Emissivity of the scene/target |
| $\tau_{win}$ | Transmission coefficient of the window |
| $T_{win}$ | Window temperature |
| $r_{win}$ | Window reflection |
| $T_{refl}$ | Temperature reflected by the window |
| $\tau_{atm}$ | Transmission coefficient of the atmosphere between the scene and the infrared camera |
| $T_{atm}$ | Atmosphere temperature |
| $T_{bkg}$ | Background temperature (reflected by the scene) |

(continued)

| Notation | Description |
|---|---|
| $T_{scene}$ | Scene temperature |
| *W(T)* | Radiated flux (in units of counts) as a function of temperature of the radiating object |

In an aspect, the various factors shown in FIG. 5 and Table 1 may impact radiometric accuracy and thus impact the uncertainty factor. These factors may be tracked (e.g., by the imaging system and/or other system) and used as feedback for the infrared camera 520 and/or a radiometric infrared camera system that includes the infrared camera 520. In some cases, weather conditions may impact atmospheric transmission, emissivity of objects in a scene, and/or window transmission. For example, weather conditions such as fog, rain, and humidity may result in water on the window 515 and thus affect transmission through the window 515. Humidity may be measured and loss due to water in the atmosphere 510 can be estimated based on measured local humidity. The uncertainty factor may factor in various of the variables set forth in Table 1, weather conditions, and/or other external factors.

As indicated previously, the uncertainty factor may be quantitative or qualitative. For a quantitative uncertainty factor, equations and/or lookup tables that relate the various parameters provided herein associated with captured infrared image data may be used to provide a quantitative indication of a confidence associated with the infrared image data. In an aspect, a confidence associated with the infrared image data may refer to a confidence of the infrared image data itself and/or data derived from the infrared image data. The uncertainty factor may also be considered an indication of operating conditions when the infrared data values are captured. In some cases, the uncertainty factor may be provided as an expected accuracy in a temperature unit and/or a percentage. As one example, an infrared image formed of the infrared image data may have an average temperature estimated to be 42°C and an associated quantitative uncertainty factor of $\pm 1.25$°C (or equivalently $\pm 3$%), such that the average temperature may be expected to fall within 42°C $\pm$ 1.25°C (or equivalently 42°C $\pm$ 3%). The quantitative uncertainty factor (e.g., $\pm$ 1.25°C and/or $\pm$ 3%) may be displayed on the display device 420. In some cases, a user may indicate whether and/or how to display/present the quantitative uncertainty factor to the user and/or others.

The uncertainty factor may be qualitative. In an aspect, the qualitative uncertainty factor may indicate, based on the operating conditions when the infrared data values are captured, which of a plurality of predetermined uncertainty levels (e.g., also referred to as predetermined confidence levels) the infrared image data associated with the FPA 405 falls within. As a non-limiting example, the qualitative uncertainty factor can be one of four predetermined levels/values. However, in other examples, the qualitative uncertainty factor may fall within fewer, more, and/or different predetermined levels than the four provided in this example.

In the example with four predetermined levels, the uncertainty factor may be represented (e.g., for display on the display device 420) as terms/phrases (e.g., "high confidence," "no confidence can be provided") or numbers/symbols (e.g., "1" for high confidence, "4" for no confidence). It is noted that the predetermined levels generally provide relative measures of uncertainty, such that an uncertainty factor of "1" is associated with a higher confidence than "2," "2" is associated with a higher confidence than "3," and so forth. For example, whether an uncertainty factor of "3" may be considered a "sufficient confidence" or "low confidence" may be dependent on implementation of the image analysis device 415 (e.g., how the image analysis device 415 generates the uncertainty factor) and/or application (e.g., safety applications may consider all uncertainty factors associated with higher uncertainty than "1" to be inadequate). Depending on implementation and/or application, the predetermined levels may, but need not, be associated with absolute measures of uncertainty. In this regard, the predetermined levels of a qualitative uncertainty factor may, but need not, correspond to values or ranges (e.g., of temperature units and/or percentages). For example, one implementation may indicate that a qualitative uncertainty factor of "2" and "3" may correspond with a quantitative uncertainty factor of $\pm 2$% and $\pm 5$%, respectively, whereas another implementation does not provide a correspondence between qualitative uncertainty factors and quantitative uncertainty factors. In some cases, as with quantitative uncertainty factors, a user may indicate whether and/or how to display/present the qualitative uncertainty factor to the user and/or others.

In one example implementation, the FPA 405 may be referred to as operating in Scenario 1 (e.g., also referred to as Uncertainty Level 1, "highest confidence," or "lowest uncertainty") and thus be considered to operate in conditions desired for (e.g., optimal for) infrared image capture when the temperature $T_{FPA}$ of the FPA 405 is at around a reference temperature (e.g., room-ambient temperature), at or near a steady-state/temperature operation (e.g., the temperature of the FPA 405 is stable), a minimal drift in temperature of the FPA 405 since a previous calibration event (e.g., FFC event), a scene temperature (e.g., an average scene temperature) is within a temperature range used to generate calibration coefficients, and little to no correction is needed for external factors such as window transmission, atmospheric transmission, and target emissivity. In such an implementation, the image analysis device 415 may receive data indicative of such conditions (e.g., measured by the imaging system and/or other system) and generate an uncertainty factor having a value of "1" to indicate that the infrared data values are of "highest confidence." In one case, the data used to generate the uncertainty factor may include the temperature $T_{FPA}$ of the FPA 405, the rate of the change in temperature $T_{FPA}$ of the FPA 405 over time, the scene temperature, the temperature range used to generate calibration coefficients, and the external factors.

In one aspect, the temperature $T_{FPA}$ of the FPA 405 may be considered to be around the reference temperature when the temperature $T_{FPA}$ is between threshold temperatures $T_{refMin\_thresh}$ and $T_{refMax\_thresh}$. A temperature of the FPA 405 farther away from the reference temperature may be associated with higher error. In one case, the reference temperature may be a room-ambient temperature. The room-ambient temperature may be 22°C. For example, the FPA temperature $T_{FPA}$ may be considered to be around the room-ambient temperature when the FPA temperature $T_{FPA}$ is within $\pm 3$°C of the room-ambient temperature (e.g., $T_{refMin\_thresh}$ = 19°C and $T_{refMax\_thresh}$ = 25°C). Different implementations of the FPA 405 may use different reference temperatures and/or different threshold temperatures $T_{refMin\_thresh}$ and/or $T_{refMax\_thresh}$.

In one aspect, the FPA 405 may be considered to be at a steady-state/steady-temperature operation when a magnitude (i.e., absolute value) of a rate of change in the temperature $T_{FPA}$ over time, denoted as $|\delta T_{FPA}/\delta t|$, is less than a stability threshold *stable* $T_{thresh}$. In this regard, the FPA 405 may be considered to be at a steady-state operation when $|\delta T_{FPA}/\delta t|$ = 0. Different implementations of the FPA 405 and/or applications may use different stability thresholds. As non-limiting examples, the stability threshold may be 0.1°C/min, 0.2°C/min, 0.3°C/min, 0.4°C/min, 0.5°C/min, values between these values, and/or other values.

In one aspect, the FPA 405 may be considered to have a minimal drift/change in the temperature $T_{FPA}$ from a temperature $T_{prevCalib}$ at which a most recent calibration event (e.g., FFC event) was performed when a magnitude of the difference between the temperature $T_{FPA}$ and the temperature $T_{prevCalib}$, denoted as $|T_{FPA} - T_{prevCalib}|$, is less than a temperature threshold $T_{calib\_thresh}$.

In one aspect, a target temperature may be within a temperature range associated with a calibration of the FPA 405. The temperature range may be based on a gain state (e.g., low gain or high gain) in which the imaging system is operated. The temperature range may be bounded by a lower threshold temperature $T_{tgtMin\_thresh}$(cur_gain_state) and an upper threshold temperature $T_{tgtMax\_thres}$(cur_gain_state), where cur_gain_state is a gain state of the imaging system and the threshold temperatures are a function of cur_gain_state. As examples, the threshold temperature $T_{tgtMin\_thres}$(cur_gain_state) and $T_{tgtMax\_thres}$(cur_gain_state) may be 5°C and 150°C, respectively, for the high gain mode and 5°C and 600°C, respectively, for the low gain mode. In one case, the calibration may be performed to determine a relationship between incident radiation (e.g., thermal infrared radiation) and temperature associated with the incident radiation. The calibration may be used to generate coefficients associated with a flux-to-temperature conversion performed by the FPA 405 and/or by components downstream of the FPA 405. For example, the calibration may be performed to determine coefficients for defining a relationship between received energy flux from an object(s) in a scene and data values indicative of temperatures of the object(s) in the scene. In some cases, the target temperature may be a temperature characteristic of the entire scene. For example, the target temperature may be an average temperature determined based on image data from the detectors of the FPA 405. In some cases, the target temperature may be a temperature characteristic of a local portion of the scene. For example, the target temperature may be an average temperature determined based on image data from the detectors of the FPA 405 that are part of a spot meter of the imaging system.

In one aspect, little to no correction may be considered to be required for external factors when a parameter based on these external factors is above a minimum transmission threshold. The external factors may include a window transmission, an atmospheric transmission, and a target emissivity.

With continued reference to the example implementation above, the FPA 405 may be referred to as operating in Scenario 2 and, equivalently, the image analysis device 415 generates an uncertainty factor of "2" if most, but not all, of the conditions of Scenario 1 are met. In one case, all of the conditions of Scenario 1 may be met, except that the temperature of the FPA 405 is determined not to be around the reference temperature. In some cases, to be in Scenario 2, while the temperature $T_{FPA}$ is determined not to be around the reference temperature, the temperature $T_{FPA}$ may need to be within a valid operating temperature range of the imaging system. The valid operating temperature range of the imaging system may span from a lower temperature threshold $T_{opMin\_thresh}$ and an upper temperature threshold $T_{opMax\_thresh}$, where $T_{opMin\_thresh} < T_{refMin\_thresh}$ and $T_{refMax\_thresh} < T_{opMax\_thresh}$. As a non-limiting example, $T_{opMin\_thresh}$ = -40°C and $T_{opMax\_thresh}$ = 100°C, although an imaging system may be appropriately designed to operate at temperatures below -40°C and/or above 100°C.

The FPA 405 may be referred to as operating in Scenario 3 and, equivalently, the image analysis device 415 generates the uncertainty factor having a value of "3" if most, but not all, of the conditions of Scenario 2 are met. In one case, all of the conditions of Scenario 2 may be met, except that the FPA 405 is not operating in a steady state. The FPA 405 may be considered to operate outside of steady state when a magnitude of a change in the temperature of the FPA 405 is greater than a stability threshold value. In some cases, to be in Scenario 3, while the FPA 405 is considered to be outside of steady state, $|\delta T_{FPA}/\delta t|$ may need to be less than a threshold slewing threshold *slowDrift*$_{thresh}$, where *slowDrift*$_{thresh}$ > *stable* $T_{thresh}$.

If the FPA 405 cannot be considered to operate in Scenarios 1, 2, and 3 as provided above, the FPA 405 may be referred to as operating in Scenario 4 and, equivalently, the image analysis device 415 generates the uncertainty factor having a value of "4." In some cases, Scenario 4 may be indicative of no specific confidence being attributable to the infrared image data captured by the FPA 405.

In some cases, one or more of the threshold values (e.g., threshold temperatures, threshold rate of change in temperature over time) provided above may be specified by a manufacturer of the imaging system. Different implementations of the FPA 405 and/or applications for the FPA 405 may be associated with different threshold values. In some cases, the threshold values may be stored in a header of each image generated by the imaging system. Storage of the threshold values in the header may facilitate processing the images generated by the imaging system, such as by various components of the imaging system (e.g., components downstream of the image capture component 115) and/or other systems.

The display device 420 receives the infrared image from the visual representation device 410 and the uncertainty factor from the image analysis device 415 and selectively displays the infrared image and/or the uncertainty factor (e.g., to the user and/or other viewers). In an aspect, the user may select whether and/or how to display the infrared image and/or the uncertainty factor. In some cases, the user may provide appropriate settings to cause the display device 420 to display the infrared image and the uncertainty factor in proximity to and/or overlaid on the infrared image. In some cases, the display device 420 may display one or more graphical user interfaces (GUIs) appropriate for receiving user input, such as user input to select whether to display the infrared image and/or the uncertainty factor, user input to select a palette to be applied by the visual representation device 410 to the infrared data values of the FPA 405, and so forth. The user input may be received via clicking (e.g., using a mouse, stylus, finger, etc.), keyboard entry (e.g., for text and numbers), gesture entry (e.g., for touch screens), voice entry (e.g., for imaging systems with voice recognition), and/or other manners to receive input from the user. By way of non-limiting examples, an input field may include a text input field, a checkbox, a radio button, a slider, or a drop-down menu. More generally, images output by the visual representation device 410 may be provided for display using the display device 420, storage (e.g., using the memory component 110), and/or further processing (e.g., prior to display). In an embodiment, the display device 420 may be, may include, or may be a part of, the display component 130.

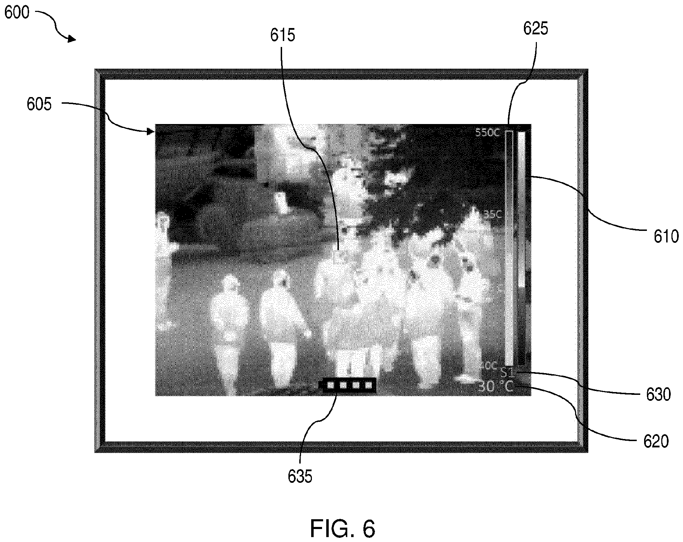

FIG. 6 illustrates an example display screen 600 with an infrared image 605 (e.g., a thermal infrared image) displayed thereon in accordance with one or more embodiments of the present disclosure. In an embodiment, the display screen 600 may be provided as part of or otherwise coupled to an imaging system (e.g., the imaging system 100). The display screen 600 may be provided for viewing by a user of the imaging system. The display screen 600 may be, may include, or may be a part of the display component 130 of FIG. 1.

The infrared image 605 has a color bar 610, a spot meter indicator 615 associated with a spot meter of the imaging system, a temperature value 620 associated with the spot meter, a thermometer bar 625 associated with the spot meter, an uncertainty factor 630 associated with the spot meter, and a battery indicator 635 of the imaging system overlaid thereon. The color bar 610 provides a representation of the mapping between a color of a pixel of the infrared image 605 and a temperature associated with that pixel. Numeric labels for temperatures are provided adjacent to the thermometer bar 625. In an aspect, a location, size (e.g., text size, bar height, and bar width), format, and/or some other characteristic of the color bar 610, the spot meter indicator 615, the temperature value 620, the thermometer bar 625, the uncertainty factor 630, and/or the battery indicator 635 may be adjustable by the user. In some cases, the user may set a default location (e.g., on the display screen 600 and/or the image displayed on the display screen 600) and a default size for the color bar 610, the spot meter indicator 615, the temperature value 620, the thermometer bar 625, the uncertainty factor 630, and/or the battery indicator 635.

The uncertainty factor 630 is represented as "S1" to indicate Scenario 1. The uncertainty factor 630 is associated with the spot meter and provides a confidence associated with the temperature value 620 and the thermometer bar 625. In this regard, the uncertainty factor 630 may be considered a confidence measure of spot meter accuracy for current operating conditions associated with the imaging system. The user may indicate how to represent (e.g., what format to display) the uncertainty factor 630. For example, rather than "SI", the uncertainty factor 630 may be represented using "Scenario 1", "1", "Highest confidence", and/or other format provided by the manufacturer and/or defined by the user. In one case, the imaging system may allow the user to select or define a format to represent each of the predetermined uncertainty levels that the uncertainty factor 630 can exhibit. Although in FIG. 6 the uncertainty factor 630 is associated specifically with the spot meter (e.g., provides a confidence associated with the temperature value 620 and the thermometer bar 625), the uncertainty factor 630 may generally be applicable to the temperature data provided by an entirety of the infrared image 605. Furthermore, while the uncertainty factor 630 is a qualitative uncertainty factor, alternatively or in addition a quantitative uncertainty factor may be displayed to the user.

In some cases, rather than overlaying the color bar 610, the spot meter indicator 615, the temperature value 620, the thermometer bar 625, the uncertainty factor 630, and/or the battery indicator 635 on the infrared image 605, the color bar 610, the spot meter indicator 615, the temperature value 620, the thermometer bar 625, the uncertainty factor 630, and/or the battery indicator 635 may be provided on portions of the display screen 600 outside the infrared image 605 when such screen real estate is available. The user may specify different formats to display the color bar 610, the spot meter indicator 615, the temperature value 620, the thermometer bar 625, the uncertainty factor 630, and/or the battery indicator 635 when overlaid on the infrared image 605 (e.g., where such information blocks a portion of the infrared image 605) versus when displayed outside the infrared image 605. For example, the user may specify to display the uncertainty factor 630 as "S1" when overlaid on the infrared image 605 and as "Scenario 1" when displayed outside of the infrared image 605. In some cases, the user may be able to select which of the color bar 610, the spot meter indicator 615, the temperature value 620, the thermometer bar 625, the uncertainty factor 630, and/or the battery indicator 635 to display or not display to the user. In some aspects, a GUI may be displayed to the user while an image (e.g., thermal infrared image) is displayed on the display screen 600, such as to respond to user input to adjust whether and/how to display the color bar 610, the spot meter indicator 615, the temperature value 620, the thermometer bar 625, the uncertainty factor 630, and/or the battery indicator 635 to cause real-time adjustment of the display screen 600 and/or other display screens.

The spot meter of the imaging system is positioned at a center of the infrared image 605, as indicated by the spot meter indicator 615. In some cases, the spot meter may be positioned (e.g., by default) at the center of the infrared image 605. In some cases, a location and/or a size of the spot meter may be specified by the user (e.g., a user-specified region of interest). As represented pictorially by the spot meter indicator 615, the spot meter encompasses multiple pixels. The location of the spot meter may be provided as row and column coordinates. For example, a location of the spot meter may be defined by row and column coordinates for a lowest-left pixel and a highest-right pixel. Although the spot meter in FIG. 6 is provided as a square region, the spot meter may be of other shapes, such as rectangular, triangular, circular, or other shape.

Various temperature data (e.g., characteristics and statistics) associated with the spot meter may be determined (e.g., by the image analysis device 415) and provided to the user, such as the location of the pixels, mean temperature of the pixels, a standard deviation and/or variance of the temperature of the pixels, a lowest temperature value among these pixels, a highest temperature value among these pixels, a location of the pixel having the lowest temperature value, and a location of the pixel having the highest temperature value. The temperature value 620 provides a temperature associated with the spot meter indicator 615 and the thermometer bar 625 provides a pictorial representation of the temperature value 620. For example, the temperature value 620 may be an average temperature of the pixels encompassed by the spot meter. In some cases, alternatively or in addition, a percentage value associated with the temperature value 620 may be overlaid on the infrared image 605. The percentage value may be around 11.9%, since 30°C is at around the 11.9% point along the entire range from -40°C to 550°C. The uncertainty factor 630 is associated with the spot meter and provides a confidence associated with the temperature value 620 and the thermometer bar 625. In some case, the temperature value 620 and the uncertainty factor 630 may be determined by the image analysis device 415. In some cases, a spot meter feature may be optional. In some cases in which no localized data (e.g., localized temperature statistics) is requested by the user, an uncertainty factor may provide a confidence associated with an entirety of an infrared image, such as a mean temperature of all the pixels of the infrared image, a standard deviation and/or variance of the temperature of all the pixels, a lowest temperature value among all the pixels, and so forth.

In an aspect, the palette (represented by the color bar 610) used to generate the infrared image 605 may be used to emphasize scene features having temperatures within a certain temperature range (e.g., a temperature range of interest) by applying/mapping color values to features in this temperature range and applying/mapping grayscale values for temperatures outside (e.g., temperatures above and below) this temperature range. For example, the palette may be used to locate humans in infrared images, such as for human detection applications. In this example, the uncertainty factor 630 may provide a confidence associated with human detection capabilities of the imaging system.

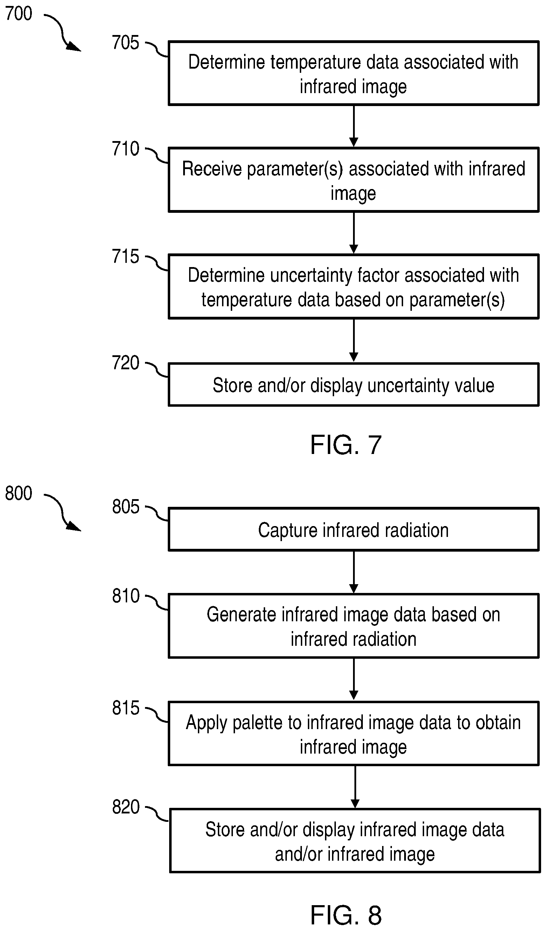

FIG. 7 illustrates a flow diagram of an example process 700 for facilitating uncertainty gauging for infrared imaging in accordance with one or more embodiments of the present disclosure. Although the process 700 is primarily described herein with reference to the system 400 of FIG. 4 for explanatory purposes, the process 700 can be performed in relation to other systems for facilitating uncertainty gauging for infrared imaging. Note that one or more operations in FIG. 7 may be combined, omitted, and/or performed in a different order as desired.

At block 705, the image analysis device 415 determines temperature data associated with an infrared image. By way of non-limiting examples, the temperature data may include an object recognition result(s), a temperature prediction associated with one or more objects, a mean temperature of the infrared image, a standard deviation and/or variance of the temperature of the pixels, a lowest temperature value among these pixels, and a highest temperature value among these pixels. The temperature data may be derived from a portion (e.g., a spot meter) or an entirety of the infrared image. In some cases, the image analysis device 415 may analyze the infrared data values from the FPA 405 and/or the infrared image (e.g., after colorization of the infrared data values) to obtain the temperature data.

At block 710, the image analysis device 415 receives a parameter(s) associated with the infrared image. The parameter(s) may include the temperature $T_{FPA}$ of the FPA 405, the rate of the change in temperature $T_{FPA}$ of the FPA 405 over time, the scene temperature, the temperature range used to generate calibration coefficients, the external factors, and/or others. In some cases, at least one of the parameters may be associated with operating conditions of the imaging system when image data is captured. In some cases, the image analysis device 415 may receive the parameter(s) in a header associated with the infrared image (e.g., via a telemetry line). At block 715, the image analysis device 415 determines an uncertainty factor associated with the temperature data based on the parameter(s). The uncertainty factor may be qualitative and/or quantitative. At block 720, the image analysis device 415 provides the uncertainty factor for storage and/or display (e.g., by the display device 420). In an embodiment, the uncertainty factor may be stored and/or displayed in association with the infrared image data and/or the infrared image.

Although the process 700 is described with reference to the system 400 of FIG. 4 in which an uncertainty factor is generated by the system 400 for image data captured by the system 400 (e.g., the uncertainty factor is generated in around real-time as the image data is captured and provided to the visual representation device 410), the process 700 may generate an uncertainty factor for image data and/or images previously captured/generated (e.g., by the system 400 and/or other system) and stored. The stored image data and/or images (e.g., stored snapshots and/or video clips) and associated data may then be accessed/retrieved for processing at a later point in time. The associated data may include metadata provided in headers appended to the image data and/or images and/or otherwise stored with appropriate indication of the data's association with the image data and/or images. Such processing may include, for example, generating an uncertainty factor for the stored image data and/or images. For example, the stored image data and/or images may be processed using an image-viewing/image-processing software tool that is part of the system 400 or separate from the system 400. For example, the metadata may include operating conditions, such as an operating temperature of the FPA 405 when the FPA 405 captured the image data, and/or other data (e.g., date and time image data was captured, whether image was captured in high gain mode or low gain mode, etc.) that may be used to determine an uncertainty factor related to the image data and/or images.

FIG. 8 illustrates a flow diagram of an example process 800 for facilitating infrared image generation in accordance with one or more embodiments of the present disclosure. Although the process 800 is primarily described herein with reference to the system 400 of FIG. 4 for explanatory purposes, the process 800 can be performed in relation to other systems for facilitating infrared image generation. Note that one or more operations in FIG. 8 may be combined, omitted, and/or performed in a different order as desired.

At block 805, the FPA 405 captures infrared radiation. The FPA 405 may be at a certain operating temperature when capturing the infrared radiation. At block 810, the FPA 405 generates infrared image data based on the captured infrared radiation. The infrared image data may include, for each detector of the FPA 405, a corresponding pixel having an infrared data value representing an intensity of infrared radiation received by the detector. For example, the FPA 405 may include an ADC circuit that outputs each infrared data value as a 14-bit digital count value (e.g., 0 to 16,383) and provides these 14-bit digital count values to the visual representation device 410.

At block 815, the visual representation device 410 applies a palette to the infrared image data to obtain an infrared image. The visual representation device 410 may receive the infrared image data from the FPA 405 and an indication of a palette to be applied to the infrared image data to represent the infrared image data. In some cases, the user may select the palette from among predefined palettes. In some cases, if the user does not specify a palette, the visual representation device 410 may select a default palette (e.g., a palette previously and/or most commonly used by the user). At block 820, the visual representation device 410 provides the infrared image data and/or infrared image for storage and/or display. In an embodiment, the infrared image may be stored, displayed (e.g., using the display device 420), and/or further processed (e.g., prior to and/or after storage and/or display).

Where applicable, various embodiments provided by the present disclosure can be implemented using hardware, software, or combinations of hardware and software. Also where applicable, the various hardware components and/or software components set forth herein can be combined into composite components comprising software, hardware, and/or both without departing from the spirit of the present disclosure. Where applicable, the various hardware components and/or software components set forth herein can be separated into sub-components comprising software, hardware, or both without departing from the spirit of the present disclosure. In addition, where applicable, it is contemplated that software components can be implemented as hardware components, and vice versa.

Software in accordance with the present disclosure, such as non-transitory instructions, program code, and/or data, can be stored on one or more non-transitory machine readable mediums. It is also contemplated that software identified herein can be implemented using one or more general purpose or specific purpose computers and/or computer systems, networked and/or otherwise. Where applicable, the ordering of various steps described herein can be changed, combined into composite steps, and/or separated into sub-steps to provide features described herein.

**Claims**

1. A method comprising:

   determining temperature data associated with infrared image data of a scene;

18

receiving at least one parameter associated with the infrared image data; and
determining an uncertainty factor associated with the temperature data based on the at least one parameter.

2. The method of claim 1, wherein the uncertainty factor is based at least on comparing the at least one parameter with at least one corresponding threshold value.

3. The method of claim 1, wherein the at least one parameter is associated with a focal plane array, FPA, used to capture the infrared image data.

4. The method of claim 3, wherein the at least one parameter comprises a temperature of the FPA when the infrared image data is captured, a change in the temperature of the FPA over time, a temperature associated with a calibration of the FPA, a gain mode associated with the FPA, a time since a start-up of the FPA, and/or a distance from a predetermined location of a field of view of the FPA.

5. The method of claim 3, wherein the at least one parameter comprises a difference between a temperature of the FPA when the infrared image data is captured and a temperature associated with a calibration of the FPA.

6. The method of claim 3, further comprising:

   capturing, by the FPA, infrared radiation; and
   generating, by the FPA, the infrared image data based on the infrared radiation, wherein the infrared image data comprises, for each detector of the FPA, a corresponding data value of the infrared image data representing an intensity of infrared radiation captured by the detector,
   wherein the temperature data comprises an object recognition result, a temperature prediction associated with an object, a mean temperature associated with the infrared image data, a standard deviation and/or variance associated with the infrared image data, a lowest temperature value associated with the infrared image data, and a highest temperature value associated with the infrared image data.

7. The method of claim 3, wherein the at least one parameter comprises a transmissivity associated with one or more objects between the scene and the FPA.

8. The method of claim 1, wherein the uncertainty factor is one of a plurality of predetermined uncertainty levels.

9. The method of claim 8, wherein:

   the uncertainty factor is associated with a first predetermined uncertainty level of the plurality of predetermined uncertainty levels based at least on:

   a temperature of a focal plane array, FPA, used to capture the infrared image data being between a first temperature range; and
   a magnitude of a rate of a change in the temperature of the FPA over time being less than a threshold rate; and

   the uncertainty factor is associated with a second predetermined uncertainty level of the plurality of predetermined uncertainty levels based at least on:

   the temperature of the FPA being outside the first temperature range and between a second temperature range that encompasses the first temperature range; and
   the magnitude of the rate of the change in the temperature of the FPA over time being less than the threshold rate.

10. The method of claim 9, wherein:

    the uncertainty factor is associated with the first predetermined uncertainty level further based at least on a transmissivity associated with one or more objects between the scene and the FPA being greater than a transmissivity threshold; and
    the uncertainty factor is associated with the second predetermined uncertainty level further based at least on the transmissivity being greater than the transmissivity threshold.

11. The method of claim 1, further comprising:

> storing the uncertainty factor; and/or
> displaying the uncertainty factor; and/or
> displaying a representation of the infrared image data, wherein the uncertainty factor is overlaid on the representation.

12. An infrared imaging system comprising:
    a processing circuit configured to:

> determine temperature data associated with infrared image data of a scene;
> receive at least one parameter associated with the infrared image data;
> determine an uncertainty factor associated with the temperature data based on the at least one parameter.

13. The infrared imaging system of claim 12, wherein the processing circuit is configured to receive the at least one parameter in a header of an infrared image formed based on the infrared image data.

14. The infrared imaging system of claim 12, wherein the at least one parameter is associated with a focal plane array, FPA, used to capture the infrared image data, wherein the at least one parameter comprises a temperature of the FPA when the infrared image data is captured, a change in the temperature of the FPA over time, a temperature associated with a calibration of the FPA, a gain mode associated with the FPA, a time since a start-up of the FPA, a distance from a predetermined location of a field of view of the FPA, and/or a transmissivity associated with one or more objects between the scene and the FPA.

15. The infrared imaging system of claim 12, wherein the temperature data comprises an object recognition result, a temperature prediction associated with an object, a mean temperature associated with the infrared image data, a standard deviation and/or variance associated with the infrared image data, a lowest temperature value associated with the infrared image data, and a highest temperature value associated with the infrared image data.

100

175

Scene
160

Imaging Capture Component
115

Image Detector Circuit
165

Readout Circuit
170

Image Interface
120

Machine
readable medium
145

Control
Component
125

Processing Component
105

Sensing
Component
135

Memory
Component
110

Display
Component
130

Network Interface
140

Network
155

Remote
Device
150

FIG. 1

FIG. 2

FIG. 3

palette

FPA
**405**

Visual Representation
Device
**410**

Display Device
**420**

Image Analysis
Device
**415**

parameter(s)

400

FIG. 4

500

Background
irradiance

External
window, $T_{win}$

Scene,
$T_{scene}$

505

510

Atmosphere, $T_{Atm}$

515

520

IR-camera

Radiometric
image

FIG. 5

FIG. 6

700

705 — Determine temperature data associated with infrared image

710 — Receive parameter(s) associated with infrared image

715 — Determine uncertainty factor associated with temperature data based on parameter(s)

720 — Store and/or display uncertainty value

FIG. 7

800

805 — Capture infrared radiation

810 — Generate infrared image data based on infrared radiation

815 — Apply palette to infrared image data to obtain infrared image

820 — Store and/or display infrared image data and/or infrared image

FIG. 8

**EUROPEAN SEARCH REPORT**

Application Number

EP 21 20 4795

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2005/015143 A2 (OPGAL LTD [IL]; GRIMBERG ERNEST [IL]) 17 February 2005 (2005-02-17) * page 1, line 6 – page 2, line 2 * * page 14, line 11 – line 14 * * page 15, line 21 – page 16, line 22 * * page 17, line 9 – page 18, line 2 * * page 18, line 27 – page 19, line 14 * * page 23, line 12 – line 17 * * page 14, line 19 – line 20 * * page 19, line 23 – line 24 * * page 25, line 27 – page 27, line 7 * * page 29, line 5 – line 8 * ----- | 1-7,9-15 | INV. G01J5/02 G01J5/06 G01J5/90 H04N5/33  ADD. G01J5/00 |
| X | WO 2015/166265 A1 (CROWCON DETECTION INSTR LTD [GB]) 5 November 2015 (2015-11-05)  * page 2, line 8 – line 14 * ----- | 1-4,6,7, 11,12, 14,15 | |
| X | DE 10 2018 218726 A1 (BOSCH GMBH ROBERT [DE]) 30 April 2020 (2020-04-30)  * paragraphs [0006], [0011], [0021], [0022] * ----- | 1-4,6,7, 11,12, 14,15 | TECHNICAL FIELDS SEARCHED (IPC)  G01J H04N |
| X | US 2020/309683 A1 (IMADE KYUICHIRO [JP]) 1 October 2020 (2020-10-01) * paragraphs [0003], [0005], [0007], [0011], [0030] – [0034], [0036], [0046] – [0052], [0063] – [0065] * * figures 6,7 * ----- | 1-4,6-15 | |
| X | US 2010/051794 A1 (ROGERS ELDON [US]) 4 March 2010 (2010-03-04)  * paragraphs [0098], [0099] * ----- | 1-4,6,7, 11,12, 14,15 | |

The present search report has been drawn up for all claims

| Place of search | Date of completion of the search | Examiner |
|---|---|---|
| Munich | 14 April 2022 | Jacquin, Jérôme |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................
& : member of the same patent family, corresponding document

EPO FORM 1503 03.82 (P04C01)

## EP 4 012 363 A1

### ANNEX TO THE EUROPEAN SEARCH REPORT
### ON EUROPEAN PATENT APPLICATION NO.

EP 21 20 4795

This annex lists the patent family members relating to the patent documents cited in the above-mentioned European search report.
The members are as contained in the European Patent Office EDP file on
The European Patent Office is in no way liable for these particulars which are merely given for the purpose of information.

14-04-2022

| Patent document cited in search report | | Publication date | Patent family member(s) | | Publication date |
|---|---|---|---|---|---|
| WO 2005015143 | A2 | 17-02-2005 | EP 1654524 A2 | | 10-05-2006 |
| | | | EP 2309237 A2 | | 13-04-2011 |
| | | | IL 173541 A | | 31-01-2012 |
| | | | JP 4604033 B2 | | 22-12-2010 |
| | | | JP 2007502403 A | | 08-02-2007 |
| | | | KR 20060064615 A | | 13-06-2006 |
| | | | KR 20110028559 A | | 18-03-2011 |
| | | | US 2008210872 A1 | | 04-09-2008 |
| | | | WO 2005015143 A2 | | 17-02-2005 |
| WO 2015166265 | A1 | 05-11-2015 | GB 2526066 A | | 18-11-2015 |
| | | | WO 2015166265 A1 | | 05-11-2015 |
| DE 102018218726 | A1 | 30-04-2020 | DE 102018218726 A1 | | 30-04-2020 |
| | | | EP 3874246 A1 | | 08-09-2021 |
| | | | US 2022003608 A1 | | 06-01-2022 |
| | | | WO 2020088951 A1 | | 07-05-2020 |
| US 2020309683 | A1 | 01-10-2020 | JP WO2019064822 A1 | | 05-11-2020 |
| | | | US 2020309683 A1 | | 01-10-2020 |
| | | | WO 2019064822 A1 | | 04-04-2019 |
| US 2010051794 | A1 | 04-03-2010 | NONE | | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 511401